# EUROPEAN PATENT APPLICATION

(11) **EP 3 113 175 A1**
(43) Date of publication of application: **04.01.2017**
(21) Application number: 15306087.6
(22) Date of filing: 02.07.2015
(51) Int. Cl.: G10L 13/04, G10L 25/48, G06Q 10/10, G10L 21/003, G10L 21/0208

(54) **METHOD FOR CONVERTING TEXT TO INDIVIDUAL SPEECH, AND APPARATUS FOR CONVERTING TEXT TO INDIVIDUAL SPEECH**

(71) Applicant: Thomson Licensing, 92130 Issy-les-Moulineaux (FR)
(72) Inventor: Duong, Quang Khanh Ngoc, 35700 Rennes (FR); Allie, Valerie, 35230 SAINT-ARMEL (FR); Perez, Patrick, 35200 Rennes (FR); Ozerov, Alexey, 35000 Rennes (FR)
(74) Representative: Huchet, Anne

(57) **Abstract**

Text-to-speech (TTS) systems produce spoken speech given a written text. Known personalized voice synthesis solutions are either not personalized, ie. the produced speech is synthesized with a generic voice, or the voice personalization process is cumbersome. An improved method (40) for converting text to speech in a terminal that is capable of receiving phone calls and text messages comprises determining (41) a person from which the text message was received, synthesizing (42) the text message to speech in a TTS module to obtain generic speech data, and mapping (43) the generic speech data to individual speech data by voice conversion. A learning-based voice conversion module (53) is used, which is initialized (435) using individual voice data of a first phone call received from the person and continuously updated (436) based on at least a second phone call received from the person.

## Description

### Field of the invention

The present principles relate to a method for converting text to individual speech, and an apparatus for converting text to individual speech.

### Background

Text-to-speech (TTS) systems produce spoken speech given a written text. It has emerged nowadays thanks to advances in different domains, such as natural language processing (NLP), automatic speech recognition (ASR) and speech synthesis. TTS offers a wide range of applications on the mobile market, for example an Android TTS module and a Samsung proprietary TTS module. Those solutions allow the user to select a speech language coinciding with the language of the text to be read out, and some output effects like "deep" or "thin" voice. However, the same voice is applied to all text messages and no personalization in terms of voice identity is possible. Other known products (like those proposed e.g. by Voxygen [3]) rely on server-based systems and offer a selection of more diverse, yet still generic voices. Another example where a TTS system is used together with ASR and NLP is Skype Translator [4], where translated texts are spoken by a TTS machine.

A personalized voice synthesis solution was proposed by MiVOQ [7]. However, this solution requires each user to read and record particular pre-defined text. As such, this solution need a substantial user input, and thus becomes cumbersome for the user and his or her communication partners.

In summary, known TTS solutions are either not "personalized", meaning that the produced speech is often synthesized with a generic male or female voice, or the voice personalization process is cumbersome: e.g., each user needs to read and record some given text.

### Summary of the Invention

The present disclosure provides enriched audio experience, compared to current TTS solutions that are embedded in terminals, such as a smartphone. According to the disclosed solution, incoming text (e.g. short messaging service/SMS or e-mail) from a particular person is synthesized with the particular person's individual voice, without requiring any user intervention for training (e.g. reading any specific text). A general framework is disclosed, which allows, in an exemplary embodiment, to first learn or train a voice conversion (VC) model for a particular user (e.g. the one in the contact list who makes an incoming phone call) on-the-fly (i.e. without requiring any user intervention), and then uses the trained voice conversion model to convert synthesized speech, which is output of a text-to-speech system, to a personalized voice that is then used to reproduce a text message received from that particular user.

In one embodiment, a method for converting text to speech in a terminal that is capable of receiving phone calls and text messages comprises features as disclosed in claim 1.

In one embodiment, an apparatus for converting text to speech in a terminal that is capable of receiving phone calls and text messages comprises features as disclosed in claim 11.

In one embodiment, an apparatus for converting text to speech in a terminal that is capable of receiving phone calls and text messages comprises at least one hardware component, such as a hardware processor, and a non-transitory, tangible, computer-readable storage medium tangibly embodying at least one software component, and when executing on the at least one hardware processor, the software component causes the hardware processor to automatically perform the method as disclosed in the claims.

In one embodiment, a computer readable medium has stored thereon executable instructions that when executed on a processor cause a processor to perform a method as disclosed in the claims.

The present principles comprise text-to-speech conversion using a speech synthesizer, and voice conversion. Voice conversion is a process that transforms the speech signal from the voice of one person, which is called source speaker, as if it would have been uttered by another person, which is called target speaker. Presently, the source speaker of the voice conversion corresponds to a generic speech of the speech synthesizer.

Advantageous embodiments of the invention are disclosed in the dependent claims, the following description and the figures.

### Brief description of the drawings

Exemplary embodiments of the invention are described with reference to the accompanying drawings, which show in
Fig.1 a general workflow of a personalized TTS system on a smartphone;
Fig.2 a general workflow for on-the-fly training of a voice conversion model;
Fig.3 an overview of personalized TTS production;
Fig.4 a flow-chart of a method for converting text to speech; and
Fig.5 a block diagram of an apparatus for converting text to speech.

### Detailed description of the invention

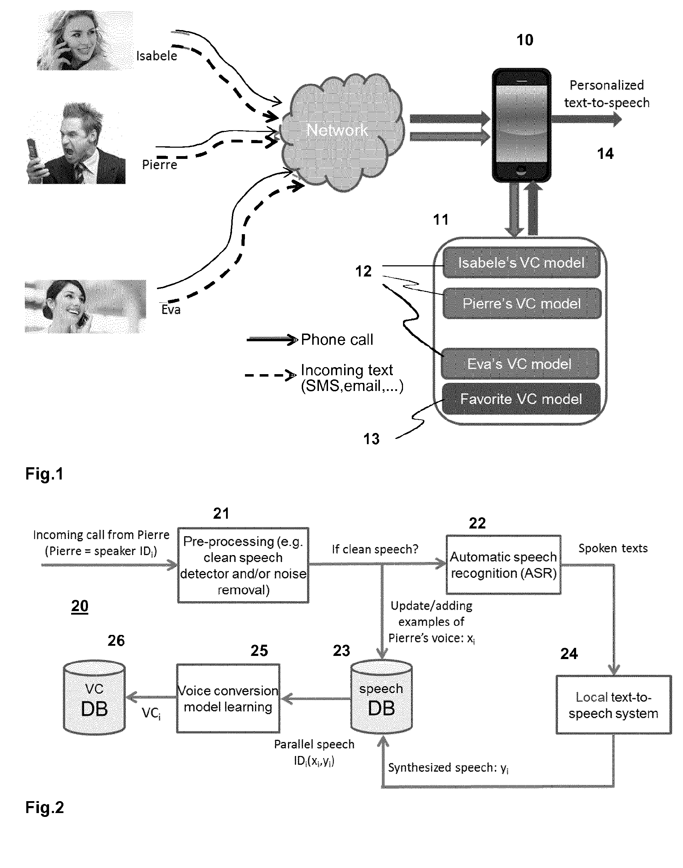

Fig.1 shows a general workflow of a personalized TTS system on a smartphone. The smartphone 10 receives through one or more networks phone calls and text messages from various persons (communication partners), e.g. Isabele, Pierre and Eva. The smartphone comprises a local contact database, where each of these persons is stored as a contact together with an identifier, e.g. a phone number. The smartphone also comprises a local VC database 11 that stores for each of these persons parameters of a VC model. In an embodiment, the local contact database and the local VC database 11 are identical, which has the advantage that the local contact database already existing in terminals can be used. In another embodiment, both are separate databases, which has the advantages that it is easier to transfer only one of the databases to another device and that separate memory modules or memory areas can be used. In one embodiment, the local VC database 11 may also comprise a favorite VC model 13 that is used, in various embodiments, for voice converting speech synthesized text messages from generic senders (such as one or more organizations), text messages from senders for whom no speech data are available yet, text messages from unknown senders, or text messages from senders who are marked by the user of the smartphone. For example, the user may mark one or more contact persons as preferred, or as not preferred.

During the incoming phone call from a user in the contact list, the smartphone collects speech examples (which should not to be too noisy), and uses the speech examples for training the VC model during a training phase. In this way, VC model learning can be performed for one, several or all contacts in the contact list. Usually, the contacts are contact persons, ie. natural persons. However, contacts may also be generic, e.g. an organization, an automatic communications server, a hotline or similar. For current VC techniques, the duration of speech example can be e.g. about 5-10 minutes.

Often, many speech samples are unusable due to noise. In one embodiment, a pre-processing step for de-noising may be performed to obtain clean speech samples for the VC training. This increases the number of speech samples that are usable for the VC training. Once a VC model for a contact ("communications partner" ,"user") is trained, text messages/emails sent from that user can be spoken by his/her own voice and then output 14, thanks to the VC system embedded in the smartphone. The synthesized speech is modified based on conventional voice conversion (e.g., as in [5]) to match the original speaker's voice.

Fig.2 shows a general workflow 20 for on-the-fly training of a voice conversion model. A pre-processing block 21 makes sure that the speech examples cumulated in the database for training the VC model are clean enough, ie. free from noise. In one embodiment, a clean speech detector (or noise level detector) tracks the noise level in the voice communication. The clean speech detector detects if the noise power in the incoming speech is below a certain threshold. The incoming speech xᵢ is used for VC model training only if its inherent noise power is below the threshold. In one embodiment, the pre-processing block 21 comprises a noise removal block for cleaning at least some, or all, noisy speech examples. An automatic speech recognition (ASR) block 22 recognizes texts from the pre-processed incoming speech. It outputs a text transcript of the input speech, which is then input to a local TTS system 24. The transcripted texts recognized by the ASR system are converted back to speech by the TTS system, which produces so-called parallel speech yᵢ to the incoming speech. These parallel speeches xᵢ,yᵢ are cumulated in a speech database 23. E.g. if one phone call is not long enough, it will be completed by at least one further phone call from the same contact person, so as to have enough samples for training the VC model. Based on the speech database 23, voice conversion model learning 25 is performed. The parallel speeches xᵢ,yᵢ are used to train, at least with a second phone call of a particular person or continuously with each phone call of that particular person, the VC model of that person. The trained VC model is saved in a VC database 26, or the previously saved VC model in the VC database 26 is updated.

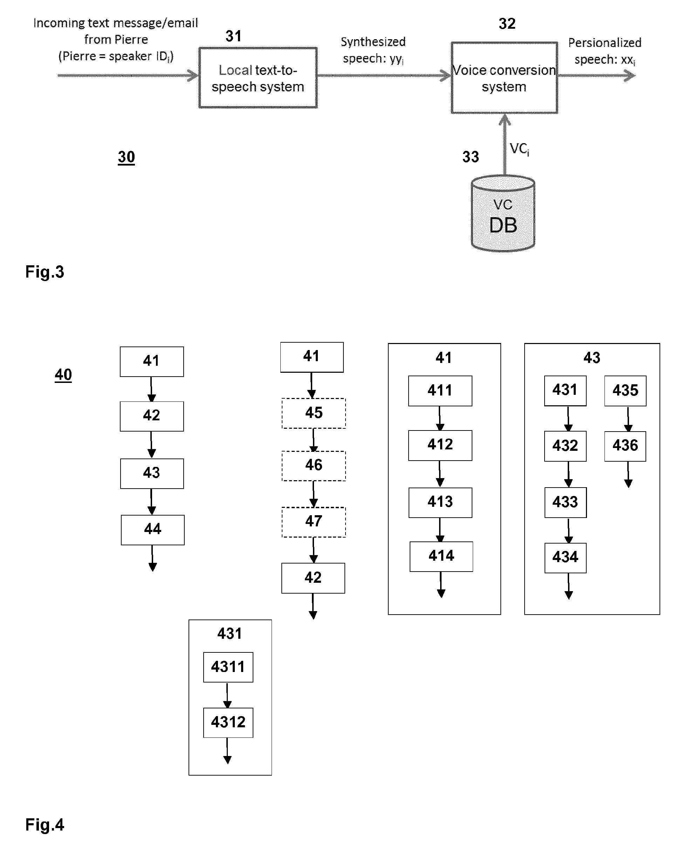

Fig.3 shows an overview of personalized TTS production, comprising a decoding stage 30 where incoming texts from a user are spoken by his/her personalized voice. This is done by synthesizing 31 the text message to speech in a TTS module, wherein generic speech data yyᵢ are obtained, and mapping the generic speech data to individual speech data xxᵢ by voice conversion 32, wherein a learning-based voice conversion module is used. The learning-based voice conversion module accesses the VC database 33 to exploit the user's pre-learned VC model. For each user for which the VC database should hold VC data, the learning-based voice conversion module is initialized based on individual voice data of a first phone call received from the user, and updated based on individual voice data of at least a second phone call received from said user. In an embodiment, two or more second phone calls received from said user are used to update the VC database 33.

In one embodiment, the local user (ie. the user/owner of the terminal) may create his own VC model, and transmit it to his/her communication partners. The own VC model can then be attached to any text message, e.g. in the form of metadata. A receiver having a compatible TTS technology can exploit the VC model metadata to generate the user's voice for reading the message. An advantage is that the example speech signals will usually be of higher quality than when recorded at the receiver's side.

Fig.4 shows a flow-chart of a method 40 for converting text to speech in a terminal that is capable of receiving phone calls and text messages, wherein a text message received at the terminal is synthesized to obtain voice data, according to one embodiment. In this embodiment, the method comprises determining 41 a person from which the text message was received, synthesizing 42 the text message to speech in a text-to-speech module 52, wherein generic speech data q52 are obtained, mapping 43 the generic speech data to individual speech data q53 by voice conversion, wherein mapped individual speech data corresponding to the text message are obtained, and wherein a learning-based voice conversion module 53 is used, and wherein the learning-based voice conversion module 53 is initialized 435 based on individual voice data of a first phone call received from said person, and updated 436 based on individual voice data of at least a second phone call received from said person, and reproducing 44 the text message using the mapped individual speech data.

In one embodiment, the method further comprises determining 45 that at least one speech sample is noisy, de-noising 46 the at least one noisy speech sample, and using the at least one de-noised speech sample to train the learning-based voice conversion module.

In one embodiment, the learning-based voice conversion module comprises or is connected to a database that is continuously updated 436 based on the individual voice data of each phone call received from said person.

In one embodiment, the method further comprises receiving 47 original voice samples, voice characteristics or voice mapping data of the person during at least one of said phone calls or together with said text message, and using the received original voice samples, voice characteristics or voice mapping data for training (ie. initializing or updating) the learning-based voice conversion module.

In one embodiment, the method further comprises receiving 431 a voice call from the person, the voice call being said first or at least second phone call, determining 432, from the voice call, voice characteristics of the person, generating 433 voice mapping data from the determined voice characteristics, the voice mapping data defining a specific mapping between the generic speech data and the voice characteristics of the person, and storing 434 the voice mapping data or the voice characteristics of the person, wherein previously stored voice mapping data or voice characteristics of the person are updated, and wherein the voice conversion module 53 is trained based on the stored voice mapping data or voice characteristics.

In one embodiment, the method further comprises recognizing 4311 speech in an automatic speech recognizer 5311, the speech being received during said phone calls from said person, wherein the automatic speech recognizer generates a text transcript TT, and wherein the learning-based voice conversion module uses the text transcript.

In one embodiment, said determining 41 a person comprises using a local contact database 58 of the terminal (such as a personal phone book).

In one embodiment, said determining 41 a person comprises determining 411 an identifier of the person (such as a telephone number), storing 412 at least the identifier in the local contact database, associating 413 the voice characteristics or the voice mapping data at least temporarily with the stored identifier, and after a name of the person has been assigned to the stored identifier in the local contact database, associating 414 the voice characteristics or the voice mapping data with the name of the person.

In one embodiment, the person is not a natural person (but, for example, an organization), and the method further comprises associating 415 the person with a natural person, wherein the learning-based voice conversion module 53 is initialized and updated based on individual voice data of said natural person.

In one embodiment, the method further comprises a "theme" mode, wherein the text message has a theme or keyword associated, and wherein in the theme mode also other text messages that have the same theme or keyword associated but come from a different person are reproduced using the individual speech data of said person. In one embodiment, voice characteristics comprises at least timbre and prosody.

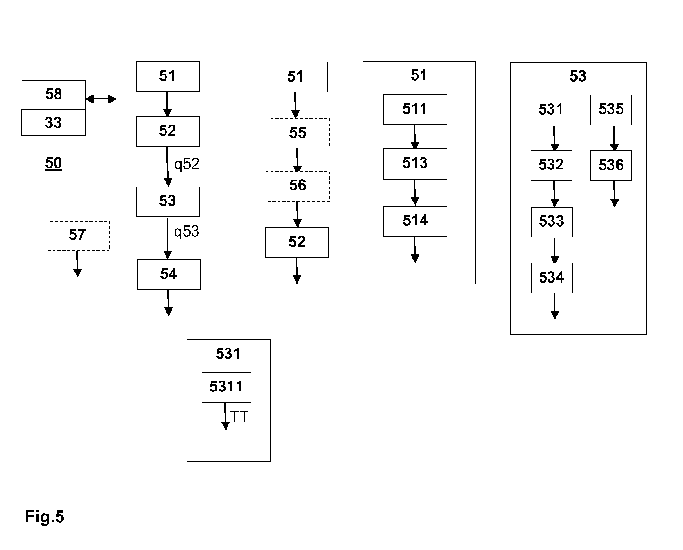

Fig.5 shows a block diagram of an apparatus 50 for converting text to speech in a terminal that is capable of receiving phone calls and text messages, according to one embodiment. The apparatus comprises
a determining module 51 adapted for determining 41 a person from which the text message was received, a text-to-speech module 52 adapted for synthesizing 42 the text message to speech, wherein generic speech data q52 are obtained,
a learning-based voice conversion module 53 adapted for mapping 43 the generic speech data to individual speech data q53, wherein mapped individual speech data corresponding to the text message are obtained, and wherein the learning-based voice conversion module is initialized based on individual voice data of a first phone call received from said person, and the learning-based voice conversion module is updated based on individual voice data of at least a second phone call received from said person, and a voice reproduction module 54 for reproducing 44 the text message using the mapped individual speech data.

In one embodiment, the apparatus further comprises a noise detector 55 adapted for determining 45 that at least one speech sample is noisy, and a de-noiser 56 adapted for de-noising 46 the at least one noisy speech sample, wherein the at least one de-noised speech sample is used to train the learning-based voice conversion module 53.

In one embodiment, the apparatus further comprises a database DB comprised in or connected to the learning-based voice conversion module 53, wherein the database is continuously updated based on the individual voice data of each phone call received from said person.

In one embodiment, the apparatus further comprises an interface 57 adapted for receiving 47 original voice samples, voice characteristics or voice mapping data of the person during at least one of said phone calls or together with said text message, wherein the received original voice samples, voice characteristics or voice mapping data are used for initializing or updating the learning-based voice conversion module 53.

In one embodiment, the apparatus further comprises a VC determiner module 532 adapted for determining, from a received voice call being said first or at least second phone call from the person, voice characteristics of the person,
a voice mapper module 533 adapted for generating 433 voice mapping data from the determined voice characteristics, the voice mapping data defining a specific mapping between the generic speech data and the voice characteristics of the person, and a storage control module 534 adapted for storing 434 the voice mapping data or the voice characteristics of the person, wherein previously stored voice mapping data or voice characteristics of the person are updated, and
wherein the learning-based voice conversion module 53 is trained based on the stored voice mapping data or voice characteristics.

In one embodiment, the apparatus further comprises an automatic speech recognizer 5311 adapted for recognizing 4311 speech being received during said phone calls from said person, wherein the automatic speech recognizer 5311 generates a text transcript TT, and wherein the learning-based voice conversion module 53 uses the text transcript TT.

In one embodiment, the apparatus further comprises an identifier determining module 511 adapted for determining 411 an identifier of the person such as a telephone number, wherein at least the identifier is stored in the local contact database, a voice associating module 513 adapted for associating 413 the voice characteristics or the voice mapping data at least temporarily with the stored identifier, and for associating 414 the voice characteristics or the voice mapping data with the name of the person, after a name of the person has been assigned to the stored identifier in the local contact database.

In one embodiment, the person is not a natural person but, for example, an organization and the person can be associated 415 with a natural person, and wherein the learning-based voice conversion module 53 is initialized and updated based on individual voice data of said natural person.

In one embodiment, the apparatus further comprises a mode selection module 505 adapted for selecting (and/or deselecting) a theme mode, wherein the text message has a theme or keyword associated, and wherein if the theme mode is selected, also other text messages that have the same theme or keyword associated but come from a different person are reproduced using the individual speech data of said person.

In one embodiment, the voice reproduction module 54 for reproducing the text message using the mapped individual speech data is external, ie. the voice reproduction is executed in a separate device.

In one embodiment, a terminal device comprises a voice receiving unit, a text message receiving unit, and an apparatus 50 for converting text to speech in a terminal that is capable of receiving phone calls and text messages, as disclosed above.

Additionally, at least the following embodiments cover possible usage scenarios: When the terminal receives a text message (SMS, instant message, E-mail) from a person in its contact list, the message can be vocally uttered with the voice (e.g., timbre and prosody) of this person.

When the user receives a text message (RSS, tweet, news feed, post) on a specific topic, the message is vocally uttered with the user's favorite voice among her contacts or with the voice of a public personality who relates to this topic. For instance a radio news feed would be uttered with a voice of the user's favorite journalist. The favorite voice here can also be the voice of the mobile phone owner if he/she wants by guiding the voice conversion system by his/her own recordings. In a case where a person is not included in the local phone directory of the user, it is possible to find that person in the Internet (e.g. in a social network) and retrieve voice samples from the Internet.

Exemplary terminals comprise at least all kinds of electronic telecommunication devices operated by a user, such as smartphones, laptops, all kinds of personal computers, and in particular mobile devices. However, the present principles may also be implemented on other types of terminals that are not explicitly mentioned.

The disclosed solution has the following advantages. It is a low-complexity on-the-fly paradigm for capturing speech examples and producing paralleled synthesized speech examples, which allows to learn and continuously train the corresponding voice conversion model for callers of each incoming phone call. The disclosed solution exploits knowledge of the identity of the calling person, which allows to bring personalized speech-to-text systems to different applications on terminals, such as e.g. smartphones, mobile phones etc.

It is noted that the use of the verb "comprise" and its conjugations does not exclude the presence of elements or steps other than those stated in a claim. Furthermore, the use of the article "a" or "an" preceding an element does not exclude the presence of a plurality of such elements. Furthermore, the invention resides in each and every novel feature or combination of features.

It should be noted that although the STRAIGHT system known in the prior art can be used as a speech analysis and synthesis system, also other types of speech analysis and synthesis systems may be used.

While there has been shown, described, and pointed out fundamental novel features of the present invention as applied to preferred embodiments thereof, it will be understood that various omissions and substitutions and changes in the apparatus and method described, in the form and details of the devices disclosed, and in their operation, may be made by those skilled in the art without departing from the spirit of the present invention. It is expressly intended that all combinations of those elements that perform substantially the same function in substantially the same way to achieve the same results are within the scope of the invention. Substitutions of elements from one described embodiment to another are also fully intended and contemplated. Each feature disclosed in the description and (where appropriate) the claims and drawings may be provided independently or in any appropriate combination. Features may, where appropriate be implemented in hardware, software, or a combination of the two. Reference numerals appearing in the claims are by way of illustration only and shall have no limiting effect on the scope of the claims.

### Cited References

[1] https://play.google.com/store/apps/details?id=com.google.android.tts
[2] http://apps.samsung.com/earth/topApps/topAppsDetail.as?productld=000000559312
[3] http://voxygen.fr/fr
[4] http://www.skype.com/en/translator-preview/
[5] A GMM-STRAIGHT Approach to Voice Conversion, http://people.csail.mit.edu/sshum/ucb_papers/voice_conv_STRAIGHT.pdf
[6] R. Aihara, R. Takashima, T. Takiguchi, and Y. Ariki. "A preliminary demonstration of exemplar-based voice conversion for articulation disorders using an individuality-preserving dictionary." EURASIP Journal on Audio, Speech, and Music Processing, 2014:5
[7] http://www.mivoq.it/joomla/index.php#Flexible_TTS

## Claims

1. A method (40) for converting text to speech in a terminal that is capable of receiving phone calls and text messages, wherein a text message received at the terminal is synthesized to obtain voice data, comprising
- determining (41) a person from which the text message was received;
- synthesizing (42) the text message to speech in a text-to-speech module (), wherein generic speech data () are obtained;
- mapping (43) the generic speech data to individual speech data () by voice conversion, wherein a learning-based voice conversion module () is used, and wherein the learning-based voice conversion module () is initialized (435) based on individual voice data of a first phone call received from said person, and updated (436) based on individual voice data of at least a second phone call received from said person; and
- reproducing (44) the individual speech data.

2. The method of claim 1, further comprising
- determining (45) that at least one speech sample is noisy;
- de-noising (46) the at least one noisy speech sample; and
- using the at least one de-noised speech sample to train the learning-based voice conversion module (53).

3. The method of claim 1 or 2, wherein the learning-based voice conversion module (53) comprises or is connected to a database that is continuously updated (436) based on the individual voice data of each phone call received from said person.

4. The method according to one of the claims 1-3, further comprising
- receiving (47) original voice samples, voice characteristics or voice mapping data of the person during at least one of said phone calls or together with said text message; and
- using the received original voice samples, voice characteristics or voice mapping data for training, initializing or updating, the learning-based voice conversion module (53).

5. The method of one of the claims 1-4, further comprising
- receiving (431) a voice call from the person, the voice call being said first or at least second phone call;
- determining (432), from the voice call, voice characteristics of the person;
- generating (433) voice mapping data from the determined voice characteristics, the voice mapping data defining a specific mapping between the generic speech data and the voice characteristics of the person; and
- storing (434) the voice mapping data or the voice characteristics of the person, wherein previously stored voice mapping data or voice characteristics of the person are updated, and wherein the voice conversion module (53) is trained based on the stored voice mapping data or voice characteristics.

6. The method of one of the claims 1-5, further comprising recognizing (4311) speech in an automatic speech recognizer (5311), the speech being received during said phone calls from said person, wherein the automatic speech recognizer generates a text transcript (TT), and wherein the learning-based voice conversion module (53) uses the text transcript.

7. The method according to one of the claims 1-6, wherein said determining (41) a person comprises using a local contact database (58) of the terminal.

8. The method according to claim 7, wherein said determining (41) a person comprises
- determining (411) an identifier of the person;
- storing (412) at least the identifier in the local contact database;
- associating (413) the voice characteristics or the voice mapping data at least temporarily with the stored identifier; and
- after a name of the person has been assigned to the stored identifier in the local contact database, associating (414) the voice characteristics or the voice mapping data with the name of the person.

9. The method according to one of the claims 1-8, wherein the person is not a natural person, further comprising
- associating (415) the person with a natural person, wherein the learning-based voice conversion module (53) is initialized and updated based on individual voice data of said natural person.

10. The method according to one of the claims 1-9, further comprising a theme mode, wherein the text message has a theme or keyword associated, and wherein in the theme mode also other text messages that have the same theme or keyword associated but come from a different person are reproduced using the individual speech data of said person.

11. An apparatus (50) for converting text to speech in a terminal that is capable of receiving phone calls and text messages, comprising
- a determining module (51) adapted for determining (41) a person from which the text message was received;
- a text-to-speech module (52) adapted for synthesizing (42) the text message to speech, wherein generic speech data (q52) are obtained;
- a learning-based voice conversion module (53) adapted for mapping (43) the generic speech data to individual speech data (q53), wherein mapped individual speech data corresponding to the text message are obtained, and wherein the learning-based voice conversion module is initialized based on individual voice data of a first phone call received from said person, and the learning-based voice conversion module is updated based on individual voice data of at least a second phone call received from said person; and
- a voice reproduction module (54) for reproducing (44) the text message using the mapped individual speech data.

12. The apparatus of claim 11, further comprising a noise detector (55) adapted for determining (45) that at least one speech sample is noisy, and a de-noiser (56) adapted for de-noising (46) the at least one noisy speech sample, wherein the at least one de-noised speech sample is used to train the learning-based voice conversion module (53).

13. The apparatus of claim 11 or 12, further comprising a database (DB) comprised in or connected to the learning-based voice conversion module (53), wherein the database is continuously updated based on the individual voice data of each phone call received from said person.

14. The apparatus of one of the claims 11-13, further comprising an interface (57) adapted for receiving (47) original voice samples, voice characteristics or voice mapping data of the person during at least one of said phone calls or together with said text message, wherein the received original voice samples, voice characteristics or voice mapping data are used for initializing or updating the learning-based voice conversion module (53).

15. A terminal device comprising a voice receiving unit, a text message receiving unit, and the apparatus according to one of the claims 11-14.
